# EUROPEAN PATENT APPLICATION

(11) **EP 4 271 118 A1**
(43) Date of publication of application: **01.11.2023**
(21) Application number: 20966892.0
(22) Date of filing: 23.12.2020
(51) Int. Cl.: H04W 76/40, H04W 28/04

(54) **TERMINAL, WIRELESS COMMUNICATION METHOD, AND BASE STATION**

(71) Applicant: NTT DOCOMO, INC., Tokyo 100-6150 (JP)
(72) Inventor: YOSHIOKA, Shohei, Tokyo 100-6150 (JP); MATSUMURA, Yuki, Tokyo 100-6150 (JP); NAGATA, Satoshi, Tokyo 100-6150 (JP)
(74) Representative: Hoffmann Eitle
(86) International application number: PCT/JP2020/048261
(87) International publication number: WO 2022/137402

(57) **Abstract**

A terminal according to one aspect of the present disclosure includes a receiving section that receives a multicast physical downlink shared channel (PDSCH), and a control section that controls repetition transmission of a physical uplink control channel (PUCCH) for transmission of transmission confirmation information for the multicast PDSCH on the basis of information notified from a base station.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems (for example, NR), it is assumed that a plurality of user terminals (User Equipment (UEs)) perform communication under ultra-high-density and high-traffic environments.

In NR, it is assumed that downlink data/downlink shared channel using multicast/broardcast is transmitted to the plurality of UEs under such environments.

However, for NR specifications thus far, communication control in a case where multicast downlink data transmission is performed has not been fully studied. Unless communication control in a case of performing downlink data transmission using multicast is appropriately performed, system performance degradation, such as throughput reduction, may occur.

Thus, an object of the present disclosure is to provide a terminal, a radio communication method, and a base station that can appropriately control communication even when multicast downlink data transmission is performed.

### Solution to Problem

A terminal according to one aspect of the present disclosure includes a receiving section that receives a multicast physical downlink shared channel (PDSCH), and a control section that controls repetition transmission of a physical uplink control channel (PUCCH) for transmission of transmission confirmation information for the multicast PDSCH on the basis of information notified from a base station.

### Advantageous Effects of Invention

According to one aspect of the present disclosure, it is possible to appropriately control communication even when multicast downlink data transmission is performed.

### Brief Description of Drawings

[FIG. 1] FIG. 1 is a diagram to show an example of PTM transmission scheme 1.
[FIG. 2] FIG. 2 is a diagram to show an example of PTM transmission scheme 2.
[FIG. 3] FIG. 3 is a diagram to show an example of transmission of a PUCCH corresponding to a multicast PDSCH.
[FIG. 4] FIG. 4 is a diagram to show an example of repetition transmission control for a PUCCH corresponding to a multicast PDSCH according to a first embodiment.
[FIG. 5] FIG. 5A to FIG. 5C are each a diagram to show an example of correspondence between the number of repetitions of a multicast PDSCH and the number of repetitions of a PUCCH according to the first embodiment.
[FIG. 6] FIG. 6 is a diagram to show an example of repetition transmission control for a PUCCH corresponding to a multicast PDSCH according to a second embodiment.
[FIG. 7] FIG. 7A to FIG. 7C are each a diagram to show an example of correspondence between the number of repetitions of a multicast PDSCH and the number of repetitions of a PUCCH according to the second embodiment.
[FIG. 8] FIG. 8A to FIG. 8C are each a diagram to show an example of correspondence between the number of repetitions of a PUCCH corresponding to a multicast PDSCH for initial transmission and the number of repetitions of a PUCCH corresponding to a multicast PDSCH for retransmission according to a fourth embodiment.
[FIG. 9] FIG. 9 is a diagram to show an example of a schematic structure of a radio communication system according to one embodiment.
[FIG. 10] FIG. 10 is a diagram to show an example of a structure of a base station according to one embodiment.
[FIG. 11] FIG. 11 is a diagram to show an example of a structure of a user terminal according to one embodiment.
[FIG. 12] FIG. 12 is a diagram to show an example of a hardware structure of the base station and the user terminal according to one embodiment.

### Description of Embodiments

### (PUCCH Format)

For future radio communication systems (for example, Rel. 15 (or later versions), 5G, NR, and the like), a configuration (also referred to as a format, a PUCCH format (PF), or the like) for an uplink control channel (for example, a PUCCH) used for transmitting uplink control information (UCI) is under study. For example, for Rel-15 NR, support for five kinds of PFs, PF 0 to PF 4, is under study. Note that the names of the PFs described below are just examples, and different names may be used.

For example, PF 0 and PF 1 are PFs used for transmitting UCI having up to 2 bits. For example, the UCI may be at least one of transmission confirmation information (also referred to as a Hybrid Automatic Repeat reQuest-Acknowledgement (HARQ-ACK), an acknowledgement (ACK), a negative-acknowledgement (NACK), or the like) and a scheduling request (SR). PF 0 can be allocated to one or two symbols, and is thus also referred to as a short PUCCH, a sequence-based short PUCCH, or the like. On the other hand, PF1 can be allocated to 4 to 14 symbols, and is thus also referred to as a long PUCCH or the like. PF 0 may transmit a sequence obtained by a cyclic shift of a base sequence by using a cyclic shift based on at least one of an initial cyclic shift (CS) index, a UCI value, a slot number, and a symbol number. In PF 1, by using block-wise spread in a time domain using at least one of a CS and a time domain (TD)-orthogonal cover code (OCC), a plurality of user terminals may be code division multiplexed (CDMed) in an identical physical resource block (PRB).

PF 2 to PF 4 are PFs used for transmitting UCI (for example, channel state information (CSI) or at least one of CSI, an HARQ-ACK, and an SR) having more than 2 bits. PF 2 can be allocated to 1 or 2 symbols, and is thus also referred to as a short PUCCH or the like. On the other hand, PF 3 and PF 4 can be allocated to 4 to 14 symbols, and are thus also referred to as a long PUCCH or the like. In PF 4, a plurality of user terminals may be CDMed by using block-wise spread before a DFT (with a frequency domain (FD)-OCC).

Intra-slot frequency hopping may be applied to PF 1, PF 3, and PF 4. Let a length of the PUCCH be N_{symb}, the length before frequency hopping (first hop) may be floor (N_{symb}/2), and the length after frequency hopping (second hop) may be ceil (N_{symb}/2).

Waveforms of PF 0, PF 1, and PF 2 may be Cyclic Prefix (CP)-Orthogonal Frequency Division Multiplexing (OFDM). Waveforms of PF 3 and PF 4 may be Discrete Fourier Transform (DFT)-spread(s)-OFDM.

Allocation of a resource (for example, a PUCCH resource) used for transmission of the uplink control channel is performed by using higher layer signaling and/or downlink control information (DCI). Here, it is only necessary that the higher layer signaling is, for example, at least one of RRC (Radio Resource Control) signaling, system information (for example, at least one of RMSI (Remaining Minimum System Information), OSI (Other System Information), an MIB (Master Information Block), and an SIB (System Information Block)), and broadcast information (PBCH (Physical Broadcast Channel)).

In NR, the number of symbols allocated to the PUCCH (which may be referred to as PUCCH allocation symbols, PUCCH symbols, or the like) can be determined in any one of a slot-specific manner, a cell-specific manner, and a user terminal-specific manner or combinations of these. It is expected that the more the number of PUCCH symbols increases, the more a communication range (coverage) extends, and thus, for example, operation in which the more a user terminal is distant from a base station (for example, eNB or gNB), the more the number of symbols increases is assumed.

### (HARQ-ACK Feedback)

For NR, mechanisms for a user terminal (UE (User Equipment)) that feeds back (also referred to as report, transmission, or the like) transmission confirmation information (also referred to as a Hybrid Automatic Repeat reQuest-ACKnowledge (HARQ-ACK), ACKnowledge/Non-ACK (ACK/NACK), HARQ-ACK information, A/N, or the like) for a downlink shared channel (also referred to as a Physical Downlink Shared Channel (PDSCH) or the like) are under study.

For example, in NR Rel. 15, a value of a given field in DCI (for example, DCI format 1_0 or DCI format 1_1) used for scheduling a PDSCH indicates a feedback timing of an HARQ-ACK for the PDSCH. When the UE transmits, in slot #n+k, an HARQ-ACK for the PDSCH received in slot #n, the value of the given field may be mapped to a k value. The given field is referred to as, for example, a PDSCH-HARQ feedback timing indicator (PDSCH-to-HARQ_feedback timing indicator) field or the like.

In NR Rel. 15, on the basis of a value of a given field in DCI (for example, DCI format 1_0 or DCI format 1_1) used for scheduling a PDSCH, a PUCCH resource to be used for feedback of an HARQ-ACK for the PDSCH is determined. The given field may be referred to as, for example, a PUCCH resource indicator (PRI) field, an ACK/NACK resource indicator (ARI) field, or the like. The value of the given field may be referred to as a PRI, an ARI, or the like.

The PUCCH resource mapped to each value of the given field may be configured for the UE beforehand by using a higher layer parameter (for example, ResourceList in PUCCH-ResourceSet). The PUCCH resource may be configured for the UE for each set (PUCCH resource set) including one or more PUCCH resources.

For NR Rel. 15, the UE that does not expect that more than one uplink control channel (Physical Uplink Control Channel (PUCCH)) having an HARQ-ACK is transmitted in a single slot is under study.

Specifically, in NR Rel. 15, one or more HARQ-ACKs in a single slot may be mapped to a single HARQ-ACK codebook, and the HARQ-ACK codebook may be transmitted on a PUCCH resource indicated by the most recent (last) DCI.

Here, the HARQ-ACK codebook may include a bit for the HARQ-ACK in a unit of at least one of a time domain (for example, a slot), a frequency domain (for example, a component carrier (CC)), a spatial domain (for example, a layer), a transport block (TB), and a group of code blocks (code block group (CBG)) constituting the TB. Note that the CC is also referred to as a cell, a serving cell, a carrier, or the like. The bit is also referred to as an HARQ-ACK bit, HARQ-ACK information, an HARQ-ACK information bit, or the like.

The HARQ-ACK codebook is also referred to as a PDSCH-HARQ-ACK codebook (pdsch-HARQ-ACK-Codebook), a codebook, a HARQ codebook, an HARQ-ACK size, or the like.

The number of bits (size) and the like included in the HARQ-ACK codebook may be determined semi-statically or dynamically. The semi-static HARQ-ACK codebook is also referred to as a type-1 HARQ-ACK codebook, a semi-static codebook, or the like. The dynamic HARQ-ACK codebook is also referred to as a type-2 HARQ-ACK codebook, a dynamic codebook, or the like.

Which of the type-1 HARQ-ACK codebook or the type-2 HARQ-ACK codebook is used may be configured for the UE by using a higher layer parameter (for example, pdsch-HARQ-ACK-Codebook).

In a case of the type-1 HARQ-ACK codebook, the UE may feed back, in a given range (for example, a range configured on the basis of the higher layer parameter), an HARQ-ACK bit corresponding to the given range regardless of whether a PDSCH is scheduled.

The given range may be determined on the basis of at least one of a given period (for example, a set of a given number of occasions for candidate PDSCH reception or a given number of monitoring occasions for a PDCCH), the number of CCs to be configured or activated for the UE, the number of TBs (the number of layers or a rank), the number of CBGs per TB, and whether or not spatial bundling is applied. The given range is also referred to as an HARQ-ACK bundling window, an HARQ-ACK feedback window, a bundling window, a feedback window, or the like.

In the type-1 HARQ-ACK codebook, the UE feeds back, if in the given range, a NACK bit even when a PDSCH for the UE is not scheduled. Thus, when the type-1 HARQ-ACK codebook is used, it is also assumed that the number of HARQ-ACK bits to be fed back increases.

On the other hand, in a case of the type-2 HARQ-ACK codebook, in the above-described given range, the UE may feed back an HARQ-ACK bit for a scheduled PDSCH.

When code block group (CBG)-based transmission (CBG-based HARQ-ACK codebook determination) is not configured for the UE by a higher layer parameter (PDSCH code block group transmission information element, PDSCH-CodeBlockGroupTransmission), the UE assumes transport block (TB)-based transmission (TB-based HARQ-ACK codebook determination). In other words, the UE generates an HARQ-ACK information bit for each TB.

When the higher layer parameter of the PDSCH code block group transmission information element has been provided for a serving cell (Component Carrier (CC)), the UE receives a PDSCH including a plurality of CBGs in one TB. The PDSCH code block group transmission information element includes a maximum number of CBGs in one TB (maxCodeBlockGroupsPerTransportBlock). For TB reception in the serving cell, the UE generates respective HARQ-ACK information bits for the plurality of CBGs, and generates an HARQ-ACK codebook including HARQ-ACK information bits with the maximum number of CBGs.

The UE may transmit one or more HARQ-ACK bits determined (generated) on the basis of the above type-1 or type-2 HARQ-ACK codebook by using at least one of an uplink control channel (Physical Uplink Control Channel (PUCCH)) and an uplink shared channel (Physical Uplink Shared Channel (PUSCH)).

### (NR Multicast/Broadcast)

In Rel-16 (or previous versions) NR, the basics of transmission of at least one of a signal and a channel (hereinafter expressed as a signal/channel) from a NW to a UE is unicast transmission. In this case, it is assumed that identical downlink (DL) data signals/channels (for example, downlink shared channels (PDSCHs)) transmitted from the NW to a plurality of UEs are received by the respective UEs using a plurality of reception occasions corresponding to a plurality of beams (or panels) of the NW.

A case where a plurality of UEs simultaneously receive identical signals/channels under ultra-high-density and high-traffic circumstances, such as environments (for example, a stadium or the like) in which a number of UEs are geographically concentrated, is also assumed. In such a case, it is conceivable that a case that a plurality of UEs are present in an identical area, and in order for each UE to receive an identical signal/channel, each UE performs reception of the signal/channel by using unicast can secure reliability of communication, but reduces resource use efficiency.

A group scheduling mechanism for a multicast/broadcast service (MBS) received by the plurality of UEs is under study.

For example, scheduling of a multicast PDSCH using one or more pieces of DCI is under study. In this case, a DCI size (payload size, overhead) may become large.

In Point-to-Point (PTP) transmission (delivery method), a RAN node (for example, a base station) transmits, to an individual UE, a separate copy of an MBS data packet via radio. In Point-to-Multipoint (PTM) transmission (delivery method), the RAN node (for example, the base station) transmits, to a set of UEs, a single copy of the MBS data packet via radio. The PTP transmission may be referred to as unicast transmission.

It is under study that the PTP transmission uses a UE-specific PDCCH for a plurality of RRC connected UEs (RRC_CONNECTED UEs) in order to schedule a UE-specific PDSCH and that the UE-specific PDCCH has a cyclic redundancy check (CRC) scrambled by a UE-specific radio network temporary identifier (RNTI) (for example, C-RNTI), and the UE-specific PDSCH is scrambled by using the same UE-specific RNTI.

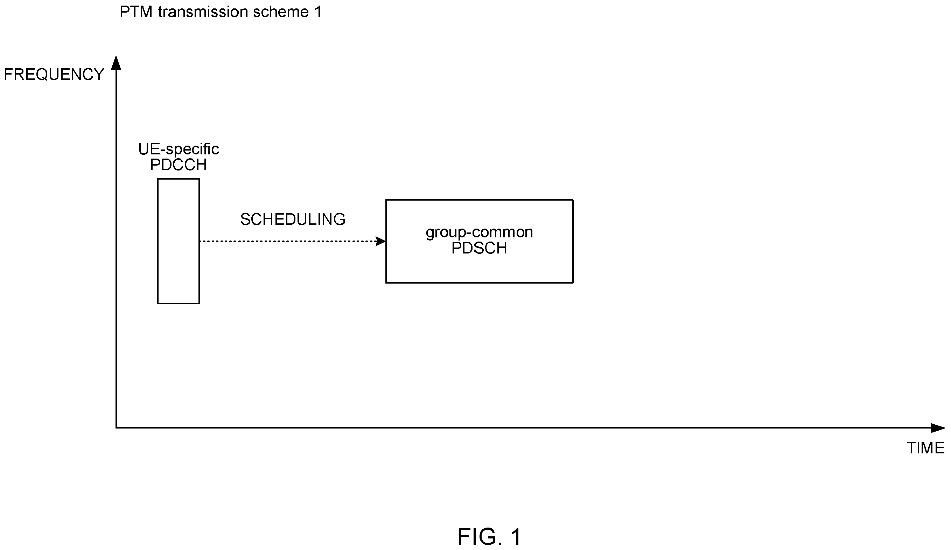

It is under study that PTM transmission scheme 1 uses a group-common PDCCH for a plurality of RRC connected UEs in the same MBS group in order to schedule a group-common PDSCH and that the group-common PDCCH has a CRC scrambled by a group-common RNTI, and the group-common PDSCH is scrambled by using the same group-common RNTI (FIG. 1).

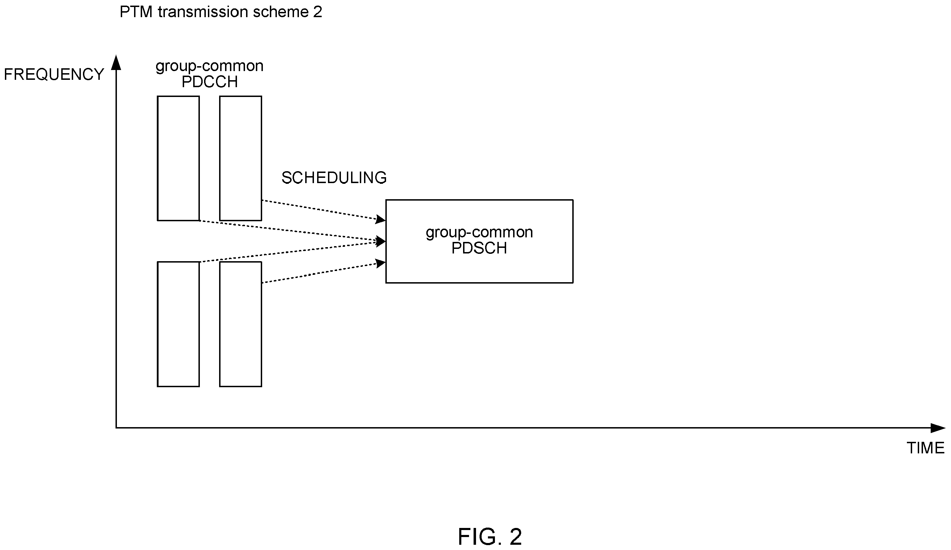

It is under study that PTM transmission scheme 2 uses a UE-specific PDCCH for a plurality of RRC connected UEs in the same MBS group in order to schedule a group-common PDSCH and that the UE-specific PDCCH has a CRC scrambled by a UE-specific RNTI (for example, C-RNTI), and the group-common PDSCH is scrambled by using the group-common RNTI (FIG. 2).

Here, the UE-specific PDCCH/PDSCH can be identified by a target UE, but another UE in the same MBS group fails to identify the UE-specific PDCCH/PDSCH. The group-common PDCCH/PDSCH are transmitted in the same time/frequency resource, and can be identified by all UEs in the same MBS group.

HARQ feedback for improvement in reliability of the MBS is under study.

For the RRC connected UEs to receive multicast, at least PTM transmission scheme 1 may support at least one of feedback method 1 and feedback method 2 below.

### [Feedback Method 1] HARQ-ACK Feedback Based on ACK/NACK for Multicast (ACK/NACK Based HARQ-ACK Feedback, ACK/NACK Based PUCCH, ACK/NACK Transmission, ACK/NACK Feedback, HARQ-ACK Information Including ACK or NACK)

A UE that successfully decodes the PDSCH transmits an ACK. A UE that fails to decode the PDSCH transmits a NACK.

### [Feedback Method 2] HARQ-ACK Feedback Based Only on NACK for Multicast (NACK-only Based HARQ-ACK Feedback, NACK-only Based PUCCH, NACK-only Transmission, NACK-only Feedback, HARQ-ACK Information Including Only NACK)

A UE that successfully decodes the PDSCH does not transmit an ACK. A UE that fails to decode the PDSCH transmits a NACK.

### (Repetition Transmission)

In Rel. 15, repetition transmission is supported in data transmission. For example, a base station (a network (NW), a gNB) may repeat transmission of DL data (for example, a downlink shared channel (PDSCH)) given times. Alternatively, a UE may repeat a UL control channel (for example, an uplink control channel (PUCCH) or UL data (for example, an uplink shared channel (PUSCH))) given times.

The number of repetitions is also referred to as a repetition factor K, an aggregation factor K, the number of slots (N_{PUCCH}^{repeat}), or the like. The n-th repetition may also be referred to as the n-th transmission occasion or the like. The UE may semi-statically receive information related to the number of repetitions of the PUCCH by using higher layer signaling (for example, nrofSlots).

In Rel. 15, when the repetition transmission is applied to the PUCCH corresponding to a unicast PDSCH, a parameter for the PUCCH repetition transmission is configured by the higher layer signaling. The repetition transmission of the PUCCH may be referred to as PUCCH repetition.

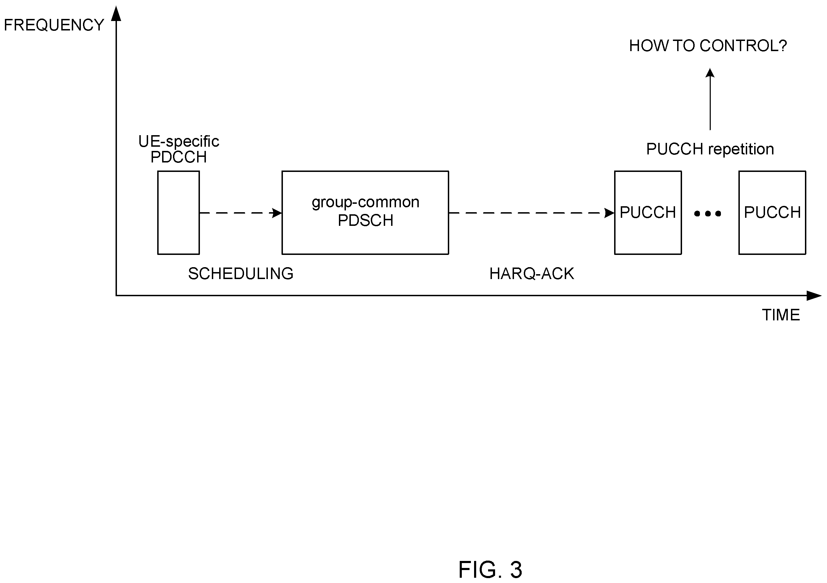

According to the repetition transmission of the PUCCH, with respect to the PUCCH, improvement in reception quality on a network side can be expected. However, in existing Rel-15/16 NR, the PUCCH corresponding to the unicast PDSCH is supported, but PUCCH transmission corresponding to the multicast PDSCH is not supported. Thus, in Rel. 17 (or later versions), when a multicast PDSCH is supported, how to control PUCCH repetition transmission corresponding to the multicast PDSCH (for example, applied or not applied, parameter configuration, or the like) is an issue (see FIG. 3) .

When repetition transmission is not appropriately applied/configured for a PUCCH for HARQ-ACK transmission corresponding to the multicast PDSCH, throughput reduction and the like may occur.

Thus, the inventors of the present invention studied UE operation for repetition transmission of a PUCCH corresponding to a multicast PDSCH, and came up with the idea of the present embodiment.

Embodiments according to the present disclosure will be described in detail with reference to the drawings as follows. The radio communication methods according to respective embodiments may each be employed individually, or may be employed in combination.

In the present disclosure, "A/B/C" and "at least one of A, B, and C" may be interchangeably interpreted. In the present disclosure, a cell, a serving cell, a CC, a carrier, a BWP, a DL BWP, a UL BWP, an active DL BWP, an active UL BWP, and a band may be interchangeably interpreted. In the present disclosure, an index, an ID, an indicator, and a resource ID may be interchangeably interpreted. In the present disclosure, "support," "control," "controllable," "operate," and "operable" may be interchangeably interpreted.

In the present disclosure, configure, activate, update, indicate, enable, specify, and select may be interchangeably interpreted.

In the present disclosure, use, determine, apply, and select may be interchangeably interpreted.

In the present disclosure, link, associate, correspond, and map may be interchangeably interpreted. In the present disclosure, allocate, assign, monitor, and map may be interchangeably interpreted.

In the present disclosure, the higher layer signaling may be, for example, any one or combinations of Radio Resource Control (RRC) signaling, Medium Access Control (MAC) signaling, broadcast information, and the like. In the present disclosure, RRC, RRC signaling, an RRC parameter, a higher layer, a higher layer parameter, an RRC information element (IE), and an RRC message may be interchangeably interpreted.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, a MAC CE and an activation/deactivation command may be interchangeably interpreted.

In the present disclosure, a PUCCH, a PUSCH, repetition, and a transmission occasion may be interchangeably interpreted.

In the present disclosure, multicast, groupcast, broadcast, and an MBS may be interchangeably interpreted. In the present disclosure, a multicast PDSCH and a PDSCH scrambled by a group-common RNTI may be interchangeably interpreted.

In the present disclosure, transmission confirmation information, HARQ-ACK, HARQ-ACK/NACK, HARQ-ACK information, HARQ, ACK/NACK, ACK, NACK, NACK-only, and UCI may be interchangeably interpreted.

In the present disclosure, "specific," "dedicated," "UE-specific," and "UE-dedicated" may be interchangeably interpreted.

In the present disclosure, "common," "shared," "group-common," "UE-common," and "shared by UEs" may be interchangeably interpreted.

In the present disclosure, UE-dedicated DCI and DCI having a CEC scrambled by a UE-dedicated RNTI may be interchangeably interpreted. The UE-dedicated RNTI may be, for example, a C-RNTI.

In the present disclosure, UE-common DCI and DCI having a CEC scrambled by a UE-common RNTI may be interchangeably interpreted. The UE-common RNTI may be, for example, a multicast-RNTI.

In the present disclosure, a PDSCH cast type may indicate whether a PDSCH is unicast or multicast.

In the present disclosure, mapping HARQ-ACK information to a PUSCH, multiplexing HARQ-ACK information and data (UL-SCH) on a PUSCH, and transmitting HARQ-ACK information on a PUSCH may be interchangeably interpreted. In the present disclosure, mapping HARQ-ACK information to a PUCCH, multiplexing HARQ-ACK information and another piece of UCI on a PUCCH, and transmitting HARQ-ACK information on a PUCCH may be interchangeably interpreted.

### (Radio Communication Method)

A UE to receive a multicast PDSCH may control so as to perform given operation for PUCCH repetition transmission. The UE to receive the multicast PDSCH may be a UE for which a given higher layer parameter (for example, a higher layer parameter related to the multicast PDSCH) has been configured, or may be a UE including capability to receive the multicast PDSCH.

The given operation may be applying PUCCH repetition (for example, PUCCH Repetition) to a PUCCH corresponding to the multicast PDSCH (given operation 1). The PUCCH corresponding to the multicast PDSCH may be interpreted as a PUCCH for transmission of HARQ-ACK information for the multicast PDSCH.

In the PUCCH repetition transmission, the same uplink control information (for example, UCI) may be repetitively transmitted in a time domain. The time domain may be a time domain (for example, TDM) varying in units of symbols/in units of slots. Which of repetition transmission (Inter slot repetition) performed on the basis of units of slots or repetition transmission (Intra slot repetition) performed in units of symbols is applied may be defined in specifications, or may be configured for the UE by higher layer signaling or the like from a base station.

The PUCCH repetition transmission may be interpreted as transmission of a PUCCH in which one piece of UCI is coded/spread across a plurality of time domains/frequency domains/spatial domains.

The PUCCH repetition transmission in the present description may be applied to a PUCCH to transmit UCI in which at least transmission confirmation information for the multicast PDSCH is included. Whether ACK/NACK feedback or NACK-only is applied as the transmission confirmation information may be configured for the UE from the base station by using higher layer signaling/DCI. It is only necessary that the UE for which the NACK-only has been configured controls so as to feed back only a NACK.

When repetition transmission of a PUCCH corresponding to the multicast PDSCH has been configured, the UE may perform repetition transmission of the PUCCH, and otherwise, the UE may control so as not to apply the PUCCH repetition transmission. The repetition transmission of the PUCCH may be configured for the UE from the base station by a higher layer parameter or the like.

Alternatively, the given operation may be not applying PUCCH repetition to the PUCCH corresponding to the multicast PDSCH (given operation 2). In this case, the UE may not assume/expect that repetition transmission is applied to the PUCCH corresponding to the multicast PDSCH.

Aspects in a case where given operation 1 is applied will be described below. Respective embodiments may each be employed individually, or may be employed in combination.

In descriptions below, a parameter related to repetition transmission may be at least one of a parameter related to ON/OFF of repetition, a parameter related to the number of repetitions, a parameter related to intra-slot frequency hopping (intra-slot frequency hopping), and a parameter related to a repetition type (Repetition type).

For example, the repetition type may be a slot-based repetition type (for example, repetition type A), or may be a symbol-based repetition type (for example, repetition type B). Repetition type A may be controlled in a manner similar to that of PUSCH repetition type A, and repetition type B may be controlled in a manner similar to that of PUSCH repetition type B.

In embodiments below, at least one of PTM transmission scheme 1 and PTM transmission scheme 2 may be employed. Which of PTM transmission scheme 1 or PTM transmission scheme 2 is employed may be configured for the UE on the basis of higher layer signaling/DCI.

In descriptions below, repetition transmission of a PUCCH corresponding to a multicast PDSCH will be described, but the present embodiment is not limited to this. The present embodiment may be employed in PUCCH resource configuration (for example, a PUCCH resource parameter) with which a resource (PUCCH resource)/repetition transmission of the PUCCH corresponding to the multicast PDSCH is applied. A parameter for the repetition transmission of the PUCCH may be interpreted as a parameter for the PUCCH resource.

### <First Embodiment>

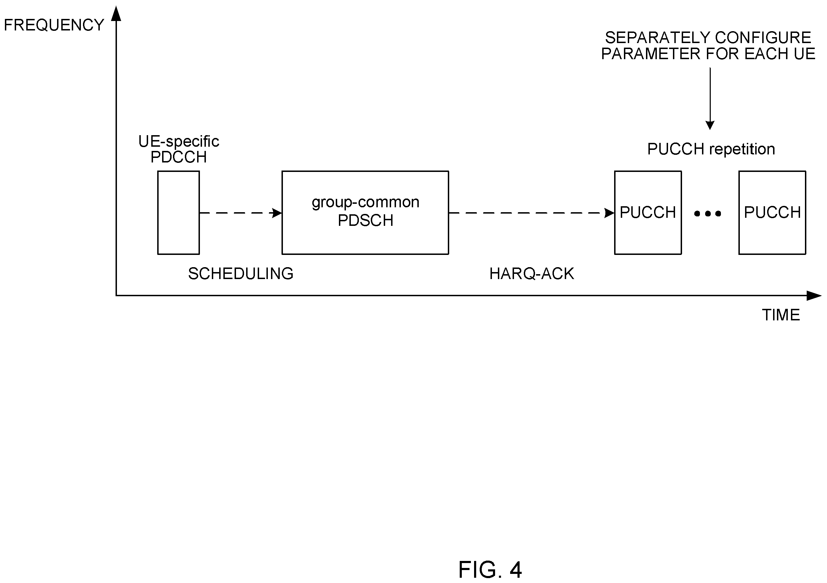

When repetition transmission is applied to a PUCCH corresponding to a multicast PDSCH, part or all of parameters related to repetition transmission of the PUCCH may be configured/indicated for each of UEs (see FIG. 4).

FIG. 4 shows a case where the multicast PDSCH (or a group-common PDSCH) is scheduled by a UE-specific PDCCH, but the multicast PDSCH may be scheduled by a UE-common PDCCH.

In FIG. 4, configuration of part or all of the parameters related to the repetition transmission may be performed on the basis of at least one of aspect 1-1 to aspect 1-5 below. In the present description, the parameters related to the repetition transmission may be interpreted as conditions applied to the repetition transmission.

Descriptions below refer to, as an example, a case where, as the parameters related to the repetition transmission, at least the number of repetition transmissions (for example, repetition times) is configured for each UE, but are not limited to this. The present disclosure may be similarly employed in another parameter (for example, at least one of a parameter related to ON/OFF of repetition, a parameter related to frequency hopping, and a parameter related to a repetition type).

In addition to a parameter for the number of repetition transmissions (for example, nrofSlots) out of parameters related to PUCCH repetition transmission, another parameter may be configured for each of the UEs, or another parameter other than the parameter for the number of repetition transmissions may be configured in common for the UEs. The number of repetition transmissions may include 1, and the number of repetition transmissions being 1 may mean a case that the repetition transmission is not applied. In this case, whether the repetition transmission is applied or not applied may be indicated/configured for the UE by configuration of the number of repetition transmissions (1 or a number other than one) .

### <<Aspect 1-1>>

The parameter related to the repetition transmission may be configured for each of PUCCH configurations. The PUCCH configuration may be a parameter (PUCCH-Config) configured by using a higher layer. The PUCCH configuration may be separately configured for each of the UEs, for each of UL partial bands (UL BWPs), or for each of component carriers (CCs).

The UE may control repetition transmission of the PUCCH corresponding to the multicast PDSCH on the basis of a parameter related to repetition transmission included in a given PUCCH configuration.

Alternatively, the parameter related to the repetition transmission may be separately configured for each UL BWP or for each CC.

### <<Aspect 1-2>>

The parameter related to the repetition transmission may be configured for each of given parameters in given PUCCH configuration (PUCCH-Config). The given parameter may be a parameter related to a PUCCH format (for example, PUCCH-FormatConfig).

A base station may separately configure a parameter related to repetition transmission (for example, nrofSlots) for each of PUCCH formats (for example, PUCCH-FormatConfig) included in PUCCH configuration. The UE may separately control repetition transmission of the PUCCH (for example, the number of transmissions) for each PUCCH format to be applied.

In this case, when a PUCCH resource set including one or more PUCCH resources has been configured, in the one or more PUCCH resources, whether repetition is applied or not/the numbers of repetition transmissions are the same with respect to a specific PUCCH format. For example, assume a case where both PUCCH resource A of PUCCH resource set #1 and PUCCH resource B of PUCCH resource set #2 correspond to a given PUCCH format, and where the number K of repetitions is configured for the given PUCCH format. In such a case, the UE controls so as to apply the same number K of repetitions to PUCCH resource A and PUCCH resource B.

Therefore, in each UE, a parameter related to repetition can be configured for each of PUCCH formats (in units of PUCCH formats).

The parameter related to the PUCCH format (for example, PUCCH-FormatConfig) may include another parameter other than a parameter related to the number of repetitions. In this case, all parameters included in PUCCH-FormatConfig may be separately configured for each UE. Alternatively, some parameters included in PUCCH-FormatConfig may be configured in common for UEs.

### <<Aspect 1-3>>

The parameter related to the repetition transmission may be configured for each of given parameters in given PUCCH configuration (PUCCH-Config). The given parameter may be a parameter related to a PUCCH resource/PUCCH resource set (for example, PUCCH-Resource/PUCCH-ResourceSet) .

The base station may separately configure a parameter related to repetition transmission (for example, nrofSlots) for each of PUCCH resources (for example, PUCCH-Resource)/PUCCH resource sets (for example, PUCCH-ResourceSet) included in PUCCH configuration. The UE may separately control repetition transmission of the PUCCH (for example, the number of transmissions) for each PUCCH resource/PUCCH resource set to be applied.

The parameter related to the PUCCH resource/PUCCH resource set (for example, PUCCH-Resource/PUCCH-ResourceSet) may include another parameter other than a parameter related to the number of repetitions. In this case, all parameters included in PUCCH-Resource/PUCCH-ResourceSet may be separately configured for each UE. Alternatively, some parameters included in PUCCH-Resource/PUCCH-ResourceSet may be configured in common for UEs.

A transmission parameter is configured for each of PUCCH resources/PUCCH resource sets, thereby allowing different parameters to be configured for PUCCH resources/PUCCH resource sets to which the same PUCCH format is applied.

### <<Aspect 1-4>>

The parameter related to the repetition transmission may be indicated for each UE on the basis of at least one of MAC control information (for example, a MAC CE) and DCI (or a DCI field).

### [MAC CE]

A parameter related to repetition transmission of the PUCCH may be indicated for each UE by using a MAC CE in a multicast PDSCH. In this case, the MAC CE transmitted in the multicast PDSCH may include indicated content for each UE. Each UE may control, on the basis of the MAC CE in the multicast PDSCH, repetition transmission of a PUCCH corresponding to the multicast PDSCH.

A parameter related to PUCCH transmission corresponding to a multicast PDSCH (for example, the MAC CE) is included in the multicast PDSCH, thereby allowing transmission of another signal/channel to be unnecessary for notification of the parameter.

Alternatively, a parameter related to repetition transmission of the PUCCH may be indicated for each UE by using a MAC CE in a unicast PDSCH (or a UE-specific PDSCH). Each UE may control, on the basis of the MAC CE in the unicast PDSCH corresponding to the UE itself, repetition transmission of a PUCCH corresponding to a multicast PDSCH.

A parameter related to PUCCH transmission corresponding to a multicast PDSCH (for example, the MAC CE) is included in a channel different from the multicast PDSCH (for example, the unicast PDSCH), thereby allowing increase in overhead of the multicast PDSCH to be suppressed.

### [DCI Field]

A parameter related to repetition transmission of the PUCCH may be indicated for each UE by using DCI corresponding to a multicast PDSCH. In this case, the DCI corresponding to the multicast PDSCH may include indicated content for each UE. For example, a parameter related to repetition transmission of the PUCCH may be configured in part of a time domain resource allocation (TDRA) table used for notification/configuration of time domain resource allocation for the multicast PDSCH.

Each UE may control, on the basis of the DCI corresponding to the multicast PDSCH, repetition transmission of a PUCCH corresponding to the multicast PDSCH. In the present description, the DCI corresponding to the multicast PDSCH may be interpreted as DCI to schedule the multicast PDSCH.

A parameter related to PUCCH transmission corresponding to a multicast PDSCH is included in DCI corresponding to the multicast PDSCH, thereby allowing a parameter for repetition transmission of the PUCCH to be dynamically changed.

Alternatively, a parameter related to repetition transmission of the PUCCH may be indicated for each UE by using DCI corresponding to a unicast PDSCH (or a UE-specific PDSCH). For example, a parameter related to repetition transmission of the PUCCH may be configured in part of a time domain resource allocation (TDRA) table used for notification/configuration of time domain resource allocation for the unicast PDSCH.

Each UE may control, on the basis of the DCI corresponding to the unicast PDSCH corresponding to the UE itself, repetition transmission of a PUCCH corresponding to a multicast PDSCH. In other words, the UE may apply, to PUCCH transmission corresponding to the multicast PDSCH, a parameter used for PUCCH transmission corresponding to the unicast PDSCH. The DCI corresponding to the unicast PDSCH may be the latest/most recent DCI received before reception of the multicast PDSCH.

A parameter related to PUCCH transmission corresponding to a multicast PDSCH is included in DCI corresponding to a unicast PDSCH, thereby allowing increase in overhead of DCI corresponding to the multicast PDSCH to be suppressed.

Alternatively, a parameter related to repetition transmission of the PUCCH may be indicated for each UE by using DCI common to a plurality of UEs (for example, group-common DCI). In this case, the group-common DCI may include indicated content for each UE. The group-common DCI may be a DCI format (for example, DCI format 2_2) used for TPC command notification, or may be another format.

Thus, a configuration in which a transmission parameter (for example, a repetition transmission parameter) for a PUCCH corresponding to a multicast PDSCH is separately indicated/notified/configured for each UE allows configuration or change about whether repetition transmission is applied or not / parameter for repetition transmission depending on quality for each

### UE.

### <<Aspect 1-5>>

The parameter related to the repetition transmission may be implicitly indicated for each UE. For example, a parameter related to repetition transmission of the PUCCH for each UE may be configured to correspond to a given condition/given parameter.

The given condition/given parameter may be, for example, a condition/parameter applied to a multicast PDSCH. In this case, the given condition/given parameter may be configured for the UE from the base station by using higher layer signaling/DCI.

As an example, the number of repetitions of a PUCCH corresponding to a multicast PDSCH may be associated with the number of repetitions (repetition times) of the multicast PDSCH. An association between the number of repetitions of the multicast PDSCH and the number of repetitions of the PUCCH corresponding to the multicast PDSCH may be separately configured/defined for each UE.

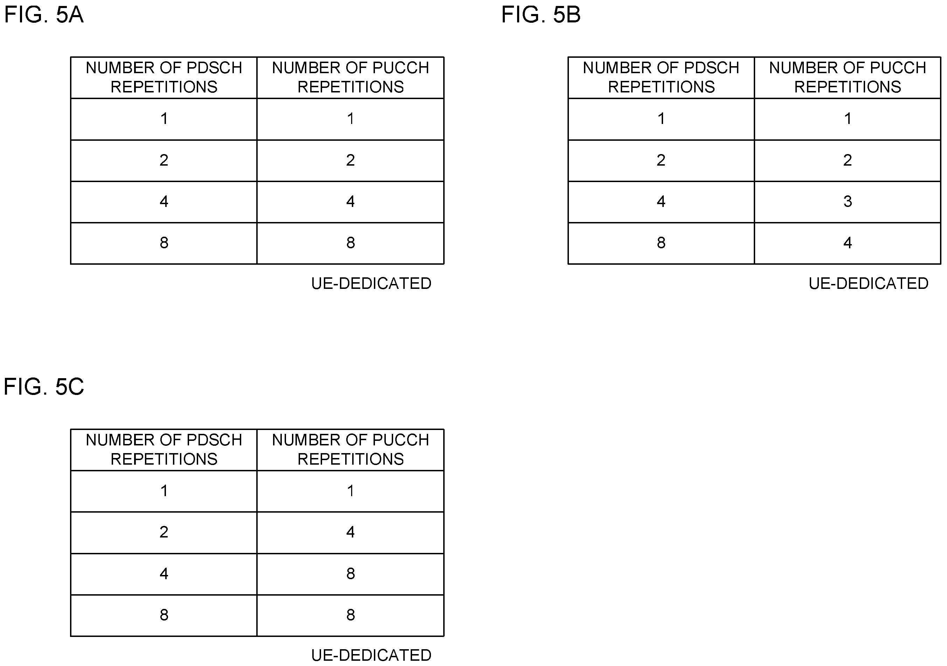

The association may be performed so that the number of repetitions of the multicast PDSCH and the number of repetitions of the PUCCH corresponding to the multicast PDSCH are identical to each other (see FIG. 5A). For example, when the number of repetitions of the multicast PDSCH is X, the UE may apply X as the number of repetitions of the PUCCH corresponding to the multicast PDSCH.

When the number of repetitions of the multicast PDSCH is 1, 1 may be associated as the number of repetitions of the PUCCH corresponding to the multicast PDSCH, and when the number of repetitions of the multicast PDSCH is greater than 1 (> 1), a value greater than 1 (> 1) may be associated as the number of repetitions of the PUCCH corresponding to the multicast PDSCH. In this case, the association may be performed so that the number of repetitions of the multicast PDSCH and the number of repetitions of the PUCCH corresponding to the multicast PDSCH are different from each other.

When the association is performed so that the number of repetitions of the multicast PDSCH and the number of repetitions of the PUCCH corresponding to the multicast PDSCH are different from each other, a given conversion rule may be defined, or the conversion rule may be indicated for each UE by using higher layer signaling (see FIG. 5B). FIG. 5B shows a case where the association is performed so that some numbers of repetitions (here, 1 and 2) out of a plurality of numbers of repetitions for the multicast PDSCH (here, 1, 2, 4, and 8) are equal to the number of repetitions of the PUCCH, and where the association is performed so that other numbers of repetitions (here, 4 and 8) are different from the number of repetitions of the PUCCH.

FIG. 5B shows a case where the association is performed so that the plurality of numbers of repetitions for the multicast PDSCH are greater than or equal to the numbers of repetitions of the PUCCH corresponding to the multicast PDSCH. In this case, the plurality of numbers of repetitions can be configured to the numbers of repetitions suitable for a TDD configuration with much DL (for example, a DL-heavy TDD configuration). This case may be suitably employed in a case where quality of the PUCCH is more satisfactory than that of the PDSCH.

Alternatively, the association may be performed so that the plurality of numbers of repetitions for the multicast PDSCH are less than or equal to the numbers of repetitions of the PUCCH corresponding to the multicast PDSCH (for example, see FIG. 5C). Such a configuration may be suitably employed in a case where quality of the PDSCH is more satisfactory than that of the PUCCH.

A parameter applied to repetition transmission of a PUCCH corresponding to a multicast PDSCH is associated with a condition/parameter applied to the multicast PDSCH, thereby allowing increase in information notified to the UE to be suppressed.

### <Second Embodiment>

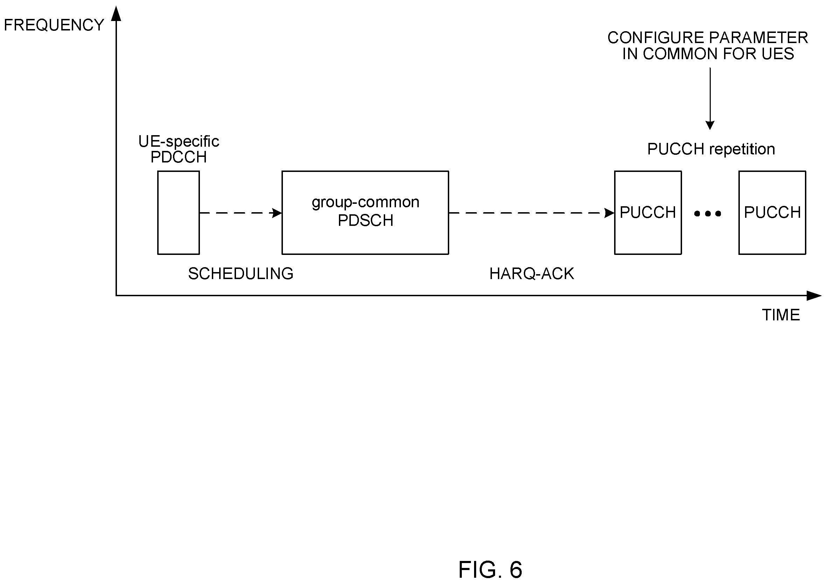

When repetition transmission is applied to a PUCCH corresponding to a multicast PDSCH, part or all of parameters related to repetition transmission may be configured/indicated in common for UEs (see FIG. 6).

FIG. 6 shows a case where the multicast PDSCH (or a group-common PDSCH) is scheduled by a UE-specific PDCCH, but the multicast PDSCH may be scheduled by a UE-common PDCCH.

In FIG. 6, configuration of part or all of the parameters related to the repetition transmission may be performed on the basis of at least one of aspect 2-1 to aspect 2-5 below.

Descriptions below refer to, as an example, a case where, as the parameters related to the repetition transmission, at least the number of repetition transmissions (for example, repetition times) is configured for each UE, but are not limited to this. In addition to a parameter for the number of repetition transmissions (for example, nrofSlots) out of parameters related to PUCCH repetition transmission, another parameter may be configured for each UE, or another parameter other than the parameter for the number of repetition transmissions may be configured in common for UEs.

### <<Aspect 2-1>>

The parameter related to the repetition transmission may be configured for each of PUCCH configurations. The PUCCH configuration may be a parameter (PUCCH-Config) configured by using a higher layer. The PUCCH configuration may be separately configured for each of the UEs, for each of UL partial bands (UL BWPs), or for each of component carriers (CCs).

When the PUCCH configuration is configured for each UE, a base station may be controlled so that the same value is configured as parameters related to PUCCH repetition transmission. Each UE may control repetition transmission of the PUCCH corresponding to the multicast PDSCH on the basis of a parameter related to repetition transmission included in a given PUCCH configuration.

Alternatively, the parameter related to the repetition transmission may be separately configured for each UL BWP or for each CC.

### <<Aspect 2-2>>

The parameter related to the repetition transmission may be configured for each of given parameters in given PUCCH configuration (PUCCH-Config). The given parameter may be a parameter related to a PUCCH format (for example, PUCCH-FormatConfig).

The base station may separately configure a parameter related to repetition transmission (for example, nrofSlots) for each of PUCCH formats (for example, PUCCH-FormatConfig) included in PUCCH configuration. The UE may separately control repetition transmission of the PUCCH (for example, the number of transmissions) for each PUCCH format to be applied.

In this case, when a PUCCH resource set including one or more PUCCH resources has been configured, in the one or more PUCCH resources, whether repetition is applied or not/the numbers of repetition transmissions are the same with respect to a specific PUCCH format. For example, assume a case where both PUCCH resource A of PUCCH resource set #1 and PUCCH resource B of PUCCH resource set #2 correspond to a given PUCCH format, and where the number K of repetitions is configured for the given PUCCH format. In such a case, the UE controls so as to apply the same number K of repetitions to PUCCH resource A and PUCCH resource B.

Therefore, between the UEs, a parameter related to repetition can be configured for each of PUCCH formats (in units of PUCCH formats).

The parameter related to the PUCCH format (for example, PUCCH-FormatConfig) may include another parameter other than a parameter related to the number of repetitions. In this case, all parameters included in PUCCH-FormatConfig may be configured in common for UEs. Alternatively, some parameters included in PUCCH-FormatConfig may be separately configured for each UE.

### <<Aspect 2-3>>

The parameter related to the repetition transmission may be configured for each of given parameters in given PUCCH configuration (PUCCH-Config). The given parameter may be a parameter related to a PUCCH resource/PUCCH resource set (for example, PUCCH-Resource/PUCCH-ResourceSet) .

The base station may separately configure a parameter related to repetition transmission (for example, nrofSlots) for each of PUCCH resources (for example, PUCCH-Resource)/PUCCH resource sets (for example, PUCCH-ResourceSet) included in PUCCH configuration. The UE may separately control repetition transmission of the PUCCH (for example, the number of transmissions) for each PUCCH resource/PUCCH resource set to be applied.

The parameter related to the PUCCH resource/PUCCH resource set (for example, PUCCH-Resource/PUCCH-ResourceSet) may include another parameter other than a parameter related to the number of repetitions. In this case, all parameters included in PUCCH-Resource/PUCCH-ResourceSet may be separately configured for each UE. Alternatively, some parameters included in PUCCH-Resource/PUCCH-ResourceSet may be configured in common for UEs.

When a parameter related to repetition transmission for each of PUCCH resources/PUCCH resource sets is configured in common for UEs, a PUCCH resource is separately configured for each UE, thereby allowing control whether PUCCH repetition transmission is applied or not / the number of PUCCH repetition transmissions depending on quality for each UE.

A transmission parameter is configured for each of PUCCH resources/PUCCH resource sets, thereby allowing different parameters to be configured for PUCCH resources/PUCCH resource sets to which the same PUCCH format is applied.

### <<Aspect 2-4>>

The parameter related to the repetition transmission may be indicated in common for UEs on the basis of at least one of MAC control information (for example, a MAC CE) and DCI (or a DCI field).

### [MAC CE]

A parameter related to repetition transmission of the PUCCH may be indicated for each UE by using a MAC CE in a multicast PDSCH. In this case, the MAC CE transmitted in the multicast PDSCH may include indicated content common to the UEs. Each UE may control, on the basis of the MAC CE in the multicast PDSCH, repetition transmission of a PUCCH corresponding to the multicast PDSCH.

The indicated content common to the UEs is included in the MAC CE transmitted in the multicast PDSCH, thereby allowing increase in overhead of the multicast PDSCH to be suppressed.

### [DCI Field]

A parameter related to repetition transmission of the PUCCH may be indicated in common for the UEs by using DCI corresponding to a multicast PDSCH. In this case, the DCI corresponding to the multicast PDSCH may include indicated content common to the UEs. For example, a parameter related to repetition transmission of the PUCCH may be configured in part of a time domain resource allocation (TDRA) table used for notification/configuration of time domain resource allocation for the multicast PDSCH.

Each UE may control, on the basis of the DCI corresponding to the multicast PDSCH, repetition transmission of a PUCCH corresponding to the multicast PDSCH.

A parameter related to PUCCH transmission corresponding to a multicast PDSCH is included in DCI corresponding to the multicast PDSCH as UE-common information, thereby allowing increase in overhead of the DCI to be suppressed.

Alternatively, a parameter related to repetition transmission of the PUCCH may be indicated for each UE by using DCI common to a plurality of UEs (for example, group-common DCI). In this case, the group-common DCI may include indicated content for each UE.

Thus, a configuration in which a transmission parameter (for example, a repetition transmission parameter) for a PUCCH corresponding to a multicast PDSCH is indicated/notified/configured in common for the Ues allows increase in overhead to be suppressed.

### <<Aspect 2-5>>

The parameter related to the repetition transmission may be implicitly indicated for each UE. For example, a parameter related to repetition transmission of the PUCCH for each UE may be configured to correspond to a given condition/given parameter.

The given condition/given parameter may be, for example, a condition/parameter applied to a multicast PDSCH. In this case, the given condition/given parameter may be configured for the UE from the base station by using higher layer signaling/DCI.

As an example, the number of repetitions of a PUCCH corresponding to a multicast PDSCH may be associated with the number of repetitions (repetition times) of the multicast PDSCH. An association between the number of repetitions of the multicast PDSCH and the number of repetitions of the PUCCH corresponding to the multicast PDSCH may be configured/defined in common for UEs.

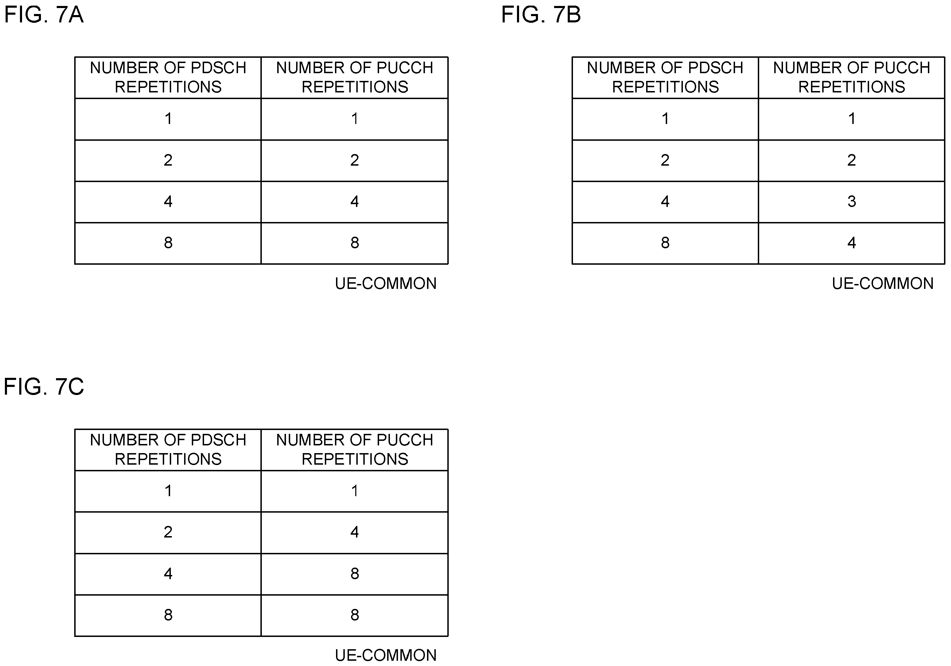

The association may be performed so that the number of repetitions of the multicast PDSCH and the number of repetitions of the PUCCH corresponding to the multicast PDSCH are identical to each other (see FIG. 7A). For example, when the number of repetitions of the multicast PDSCH is X, the UE may apply X as the number of repetitions of the PUCCH corresponding to the multicast PDSCH.

When the number of repetitions of the multicast PDSCH is 1, 1 may be associated as the number of repetitions of the PUCCH corresponding to the multicast PDSCH, and when the number of repetitions of the multicast PDSCH is greater than 1 (> 1), a value greater than 1 (> 1) may be associated as the number of repetitions of the PUCCH corresponding to the multicast PDSCH. In this case, the association may be performed so that the number of repetitions of the multicast PDSCH and the number of repetitions of the PUCCH corresponding to the multicast PDSCH are different from each other.

When the association is performed so that the number of repetitions of the multicast PDSCH and the number of repetitions of the PUCCH corresponding to the multicast PDSCH are different from each other, a given conversion rule may be defined, or the conversion rule may be indicated for each UE by using higher layer signaling (see FIG. 7B). FIG. 7B shows a case where the association is performed so that some numbers of repetitions (here, 1 and 2) out of a plurality of numbers of repetitions for the multicast PDSCH (here, 1, 2, 4, and 8) are equal to the number of repetitions of the PUCCH, and where the association is performed so that other numbers of repetitions (here, 4 and 8) are different from the number of repetitions of the PUCCH.

FIG. 7B shows a case where the association is performed so that the plurality of numbers of repetitions for the multicast PDSCH are greater than or equal to the numbers of repetitions of the PUCCH corresponding to the multicast PDSCH. In this case, the plurality of numbers of repetitions can be configured to the numbers of repetitions suitable for a TDD configuration with much DL (for example, a DL-heavy TDD configuration). This case may be suitably employed in a case where quality of the PUCCH is more satisfactory than that of the PDSCH.

Alternatively, the association may be performed so that the plurality of numbers of repetitions for the multicast PDSCH are less than or equal to the numbers of repetitions of the PUCCH corresponding to the multicast PDSCH (for example, see FIG. 7C). Such a configuration may be suitably employed in a case where quality of the PDSCH is more satisfactory than that of the PUCCH.

A parameter applied to repetition transmission of a PUCCH corresponding to a multicast PDSCH is associated with a condition/parameter applied to the multicast PDSCH, thereby allowing increase in information notified to the UE to be suppressed.

### <Third Embodiment>

On the basis of a given condition, part or all of parameters related to repetition transmission of a PUCCH corresponding to a multicast PDSCH may be separately configured/indicated for each of UEs, or may be configured/indicated in common for the UEs. In other words, a configuration described in the first embodiment and a configuration described in the second embodiment may be separately used (or configured/applied so as to switch therebetween) on the basis of a given condition.

The UE may separately use the configuration described in the first embodiment and the configuration described in the second embodiment on the basis of at least one of aspect 3-1 to aspect 3-5 below. The configuration described in the first embodiment may be selected from at least one of aspect 1-1 to aspect 1-5. The configuration described in the second embodiment may be selected from at least one of aspect 2-1 to aspect 2-5.

### <<Aspect 3-1>>

On the basis of kinds/types of transmission confirmation information transmitted on a PUCCH, methods for configuring a parameter for repetition transmission of the PUCCH (for example, a UE-dedicated or UE-common manner) may be separately used. For example, the methods may be separately used on the basis of whether a configuration in which an ACK/NACK is fed back (for example, ACK/NACK feedback) or a configuration in which only a NACK is fed back (for example, NACK-only or NACK-only feedback) is applied as transmission confirmation information for the multicast PDSCH.

As an example, the second embodiment (for example, aspect 2-2) may be employed in a case where only a NACK is fed back, and the first embodiment (for example, aspect 1-3) may be employed in a case where an ACK/NACK is fed back. Of course, aspects to be applied are not limited to this.

When an ACK/NACK is fed back, a parameter for PUCCH repetition transmission is separately configured for each UE, thereby allowing a parameter (for example, the number of PUCCH repetition transmissions) suitable for each UE to be configured. When only a NACK is fed back, a parameter for PUCCH repetition transmission is configured in common for UEs, thereby allowing NACK feedback to be performed by using a PUCCH resource common to a plurality of UEs.

### <<Aspect 3-2>>

On the basis of a given condition used in communication, methods for configuring a parameter for repetition transmission of the PUCCH (for example, a UE-dedicated or UE-common manner) may be separately used. The given condition may be at least one of a higher layer parameter, a MAC CE, a DCI format, a DCI field, a PDCCH scrambling RNTI (PDCCH-scrambling RNTI), a control resource set, a search space set, and UE capability.

### <<Aspect 3-3>>

On the basis of a PTM (Point-to-Multipoint) transmission scheme, methods for configuring a parameter for repetition transmission of the PUCCH (for example, a UE-dedicated or UE-common manner) may be separately used. For example, the second embodiment (for example, aspect 2-2) may be employed in a case of PTM transmission scheme 1, and the first embodiment (for example, aspect 1-3) may be employed in a case of PTM transmission scheme 2. Of course, aspects to be applied are not limited to this.

### <<Aspect 3-4>>

On the basis of whether PUCCH resource configuration (for example, PUCCH resource configuration) is configured in common for UEs, methods for configuring a parameter for repetition transmission of the PUCCH (for example, a UE-dedicated or UE-common manner) may be separately used.

For example, the second embodiment (for example, aspect 2-2) may be employed in a case where the PUCCH resource configuration is configured in common for the UEs, and the first embodiment (for example, aspect 1-3) may be employed in a case where the PUCCH resource configuration is not configured in common for the UEs. Of course, aspects to be applied are not limited to this.

Alternatively, the second embodiment (for example, aspect 2-2) may be employed in a case where the PUCCH resource configuration is not configured in common for the UEs, and the first embodiment (for example, aspect 1-3) may be employed in a case where the PUCCH resource configuration is configured in common for the UEs. Of course, aspects to be applied are not limited to this.

### <<Aspect 3-5>>

On the basis of whether a PUCCH resource used by the UE is configured in common for UEs, methods for configuring a parameter for repetition transmission of the PUCCH (for example, a UE-dedicated or UE-common manner) may be separately used.

For example, the second embodiment (for example, aspect 2-2) may be employed in a case where a PUCCH resource used by each UE is configured in common for the UEs, and the first embodiment (for example, aspect 1-3) may be employed in a case where the PUCCH resource used by each UE is not configured in common for the UEs. Of course, aspects to be applied are not limited to this.

Alternatively, the second embodiment (for example, aspect 2-2) may be employed in a case where the PUCCH resource used by each UE is not configured in common for the UEs, and the first embodiment (for example, aspect 1-3) may be employed in a case where the PUCCH resource used by each UE is configured in common for the UEs. Of course, aspects to be applied are not limited to this.

### <Fourth Embodiment>

A parameter for repetition transmission of a PUCCH corresponding to a multicast PDSCH to be retransmitted may be determined on the basis of a given condition. The PUCCH corresponding to the multicast PDSCH to be retransmitted may be interpreted as a PUCCH used for UCI transmission including at least a HARQ-ACK for the multicast PDSCH to be retransmitted.

Descriptions below use, as an example, a case where the multicast PDSCH is retransmitted, but may be employed in a case where the PUCCH is retransmitted. In this case, a PUCCH corresponding to the multicast PDSCH in initial transmission may correspond to a PUCCH in the initial transmission, and a PUCCH corresponding to the multicast PDSCH in retransmission may correspond to a PUCCH in the retransmission.

A UE may determine, on the basis of at least one of the first embodiment to the third embodiment, the parameter for the repetition transmission of the PUCCH corresponding to the multicast PDSCH to be retransmitted. In this case, the same method as a method for determining a parameter for repetition transmission of a PUCCH corresponding to the multicast PDSCH to be initially transmitted may be employed. For example, the UE may determine the parameter for the PUCCH corresponding to the retransmitted multicast PDSCH on the basis of a method similar to that in initial reception of the multicast PDSCH.

The parameter related to the repetition transmission of the PUCCH corresponding to the multicast PDSCH to be retransmitted may be implicitly indicated for each UE. For example, the parameter (for example, the number of repetitions) for the repetition transmission of the PUCCH corresponding to the multicast PDSCH to be retransmitted may be determined on the basis of the parameter (for example, the number of repetitions) for the repetition transmission of the PUCCH corresponding to the multicast PDSCH for the initial transmission.

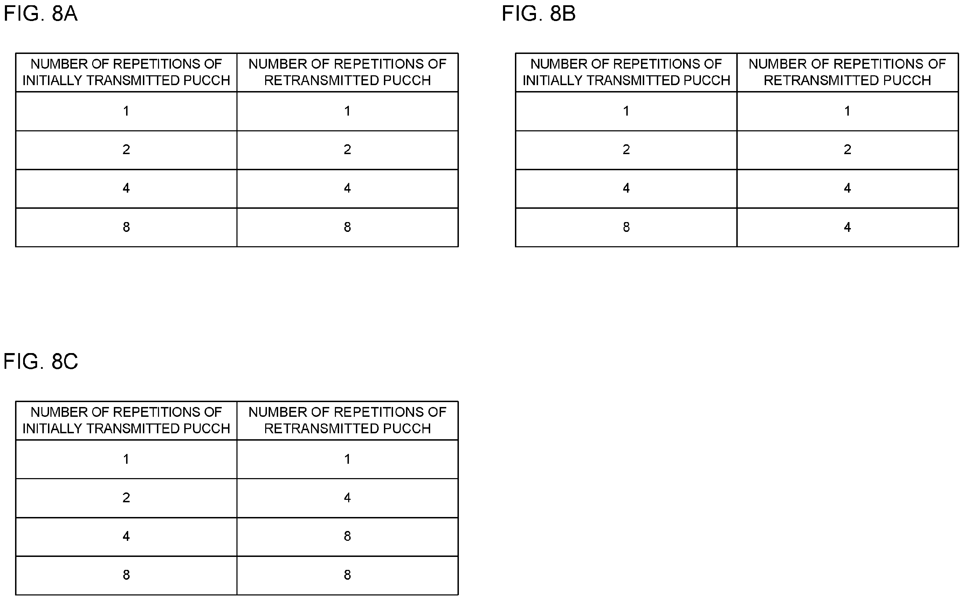

An association may be performed so that the number of repetitions of the PUCCH corresponding to the multicast PDSCH in the initial transmission and the number of repetitions of the PUCCH corresponding to the multicast PDSCH to be retransmitted are identical to each other (see FIG. 8A). For example, when the number of repetitions of the PUCCH corresponding to the multicast PDSCH in the initial transmission is Y, the UE may apply Y as the number of repetitions of the PUCCH corresponding to the multicast PDSCH in the retransmission.

When the number of repetitions of the PUCCH corresponding to the multicast PDSCH in the initial transmission is 1, 1 may be associated as the number of repetitions of the PUCCH corresponding to the multicast PDSCH in the retransmission, and when the number of repetitions of the PUCCH corresponding to the multicast PDSCH in the initial transmission is greater than 1 (> 1), a value greater than 1 (> 1) may be associated as the number of repetitions of the PUCCH corresponding to the multicast PDSCH in the retransmission. In this case, the association may be performed so that the number of repetitions of the PUCCH corresponding to the multicast PDSCH in the initial transmission and the number of repetitions of the PUCCH corresponding to the multicast PDSCH in the retransmission are different from each other.

When the association is performed so that the number of repetitions of the PUCCH corresponding to the multicast PDSCH in the initial transmission and the number of repetitions of the PUCCH corresponding to the multicast PDSCH in the retransmission are different from each other, a given conversion rule may be defined, or the conversion rule may be indicated for each UE by using higher layer signaling.

For example, the association may be performed so that the number of repetitions of the PUCCH corresponding to the multicast PDSCH in the initial transmission (or a PUCCH in the initial transmission) is greater than or equal to the number of repetitions of the PUCCH corresponding to the multicast PDSCH in the retransmission (or a PUCCH in the retransmission) (see FIG. 8B). For example, even when the UE has failed to receive the multicast PDSCH for the initial transmission, a configuration of FIG. 8B can be suitably employed in a case where there is a high possibility that the multicast PDSCH to be retransmitted can be properly received.

Alternatively, the association may be performed so that the number of repetitions of the PUCCH corresponding to the multicast PDSCH in the retransmission (or the PUCCH in the retransmission) is greater than or equal to the number of repetitions of the PUCCH corresponding to the multicast PDSCH in the initial transmission (or the PUCCH in the initial transmission) (see FIG. 8C). For example, when the UE has failed to receive the multicast PDSCH for the initial transmission, a configuration of FIG. 8C can be suitably employed in a case where failure in the retransmission is to be reduced (or a case where the retransmission is required to be transmitted more safely).

### (Variation)

Respective embodiments may be employed in combination. For example, the first embodiment (for example, aspect 1-4) and the second embodiment (for example, aspect 2-2) may be employed in combination. In this case, a parameter (or a plurality of parameter candidates) for each of PUCCH formats (for example, PUCCH-FormatConfig) in given PUCCH configuration (for example, PUCCHConfig) may be configured in common for UEs, and a specific parameter may be indicated for each of UEs on the basis of a MAC CE/DCI. Thus, a parameter common to a plurality of UEs is configured by using higher layer signaling, and a UE-dedicated parameter is configured by using a MAC CE/DCI, thereby allowing a parameter to be flexibly configured for each UE.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

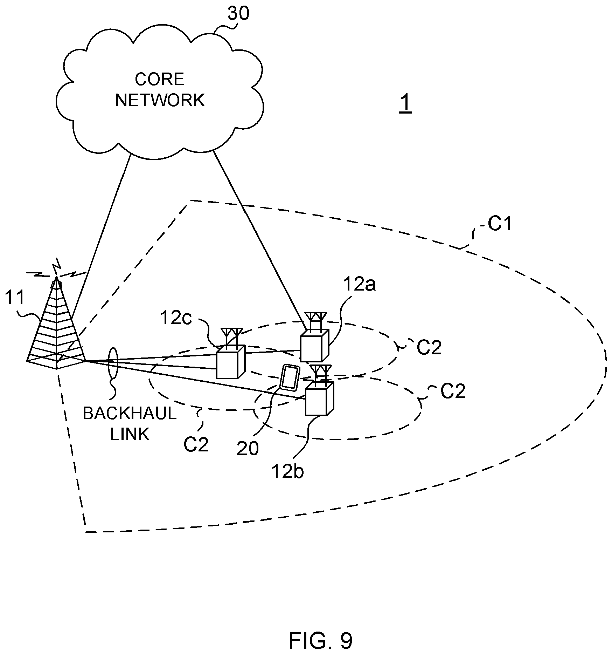

FIG. 9 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP) .

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

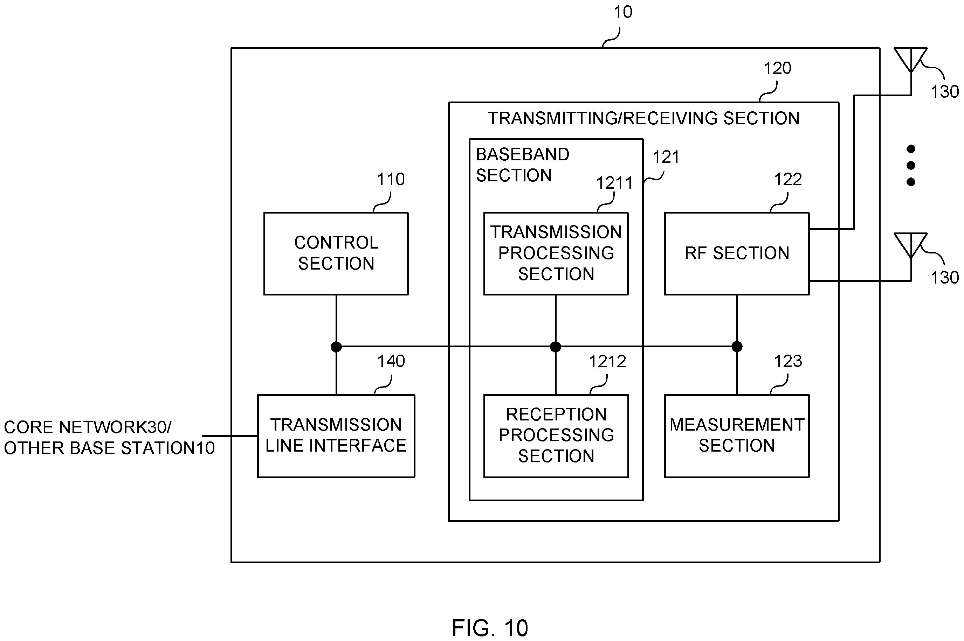

FIG. 10 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit a multicast physical downlink shared channel (PDSCH).

The control section 110 may control transmission of information applied to repetition transmission of a physical uplink control channel (PUCCH) for transmission of transmission confirmation information for the multicast PDSCH.

### (User Terminal)

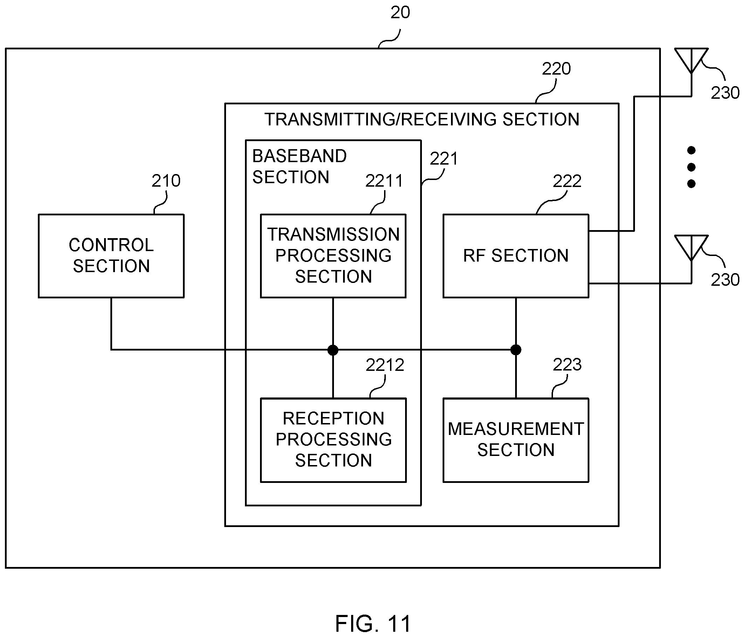

FIG. 11 is a diagram to show an example of a structure of a user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive a multicast physical downlink shared channel (PDSCH).

The control section 110 may control repetition transmission of a physical uplink control channel (PUCCH) for transmission of transmission confirmation information for the multicast PDSCH on the basis of information notified from a network (for example, a base station).

At least one of parameters related to the repetition transmission of the PUCCH may be separately configured for each of terminals (first embodiment).

At least one of parameters related to the repetition transmission of the PUCCH may be configured in common for a plurality of terminals (second embodiment).

The control section 110 may separately determine a first parameter related to repetition transmission of a PUCCH for initial transmission of the multicast PDSCH and a second parameter related to repetition transmission of a PUCCH for retransmission of the multicast PDSCH (fourth embodiment).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

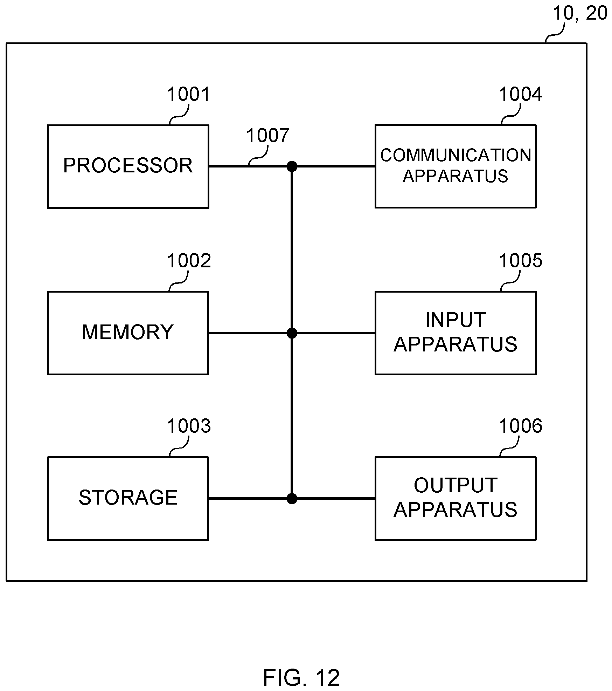

For example, a base station, a user terminal, and so on according to one embodiment of the present disclosure may function as a computer that executes the processes of the radio communication method of the present disclosure. FIG. 12 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink," "downlink," and the like may be interpreted as the words corresponding to the terminal-to-terminal communication (for example, "sidelink"). For example, an uplink channel, a downlink channel, and the like may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives a multicast physical downlink shared channel (PDSCH); and
a control section that controls repetition transmission of a physical uplink control channel (PUCCH) for transmission of transmission confirmation information for the multicast PDSCH on the basis of information notified from a base station.

2. The terminal according to claim 1, wherein
at least one of parameters related to the repetition transmission of the PUCCH is separately configured for each of terminals.

3. The terminal according to claim 1, wherein
at least one of parameters related to the repetition transmission of the PUCCH is configured in common for a plurality of terminals.

4. The terminal according to any one of claims 1 to 3, wherein
the control section separately determines a first parameter related to repetition transmission of a PUCCH for initial transmission of the multicast PDSCH and a second parameter related to repetition transmission of a PUCCH for retransmission of the multicast PDSCH.

5. A radio communication method for a terminal, the radio communication method comprising:
receiving a multicast physical downlink shared channel (PDSCH); and
controlling repetition transmission of a physical uplink control channel (PUCCH) for transmission of transmission confirmation information for the multicast PDSCH on the basis of information notified from a base station.

6. A base station comprising:
a transmitting section that transmits a multicast physical downlink shared channel (PDSCH); and
a control section that controls transmission of information applied to repetition transmission of a physical uplink control channel (PUCCH) for transmission of transmission confirmation information for the multicast PDSCH.
